Europäisches Patentamt

European Patent Office

Office européen des brevets

(19)

(11) Publication number: 0 174 029
A2

(12) **EUROPEAN PATENT APPLICATION**

(21) Application number: 85111261.5

(22) Date of filing: 06.09.85

(51) Int. Cl.⁴: **B 65 D 41/04**

(30) Priority: 07.09.84 US 648059
19.08.85 US 766381

(43) Date of publication of application:
12.03.86 Bulletin 86/11

(84) Designated Contracting States:
AT BE CH DE FR GB IT LI LU NL SE

(71) Applicant: TBL DEVELOPMENT CORPORATION
128 Passaic Avenue
Livingston New Jersey 07039(US)

(72) Inventor: Towns, Edward J.
Hamilton Court Apartments Apt. 2E, 7 Hamilton Road
Morristown New Jersey 07960(US)

(72) Inventor: Brown, Edward M.
128 Passaic Avenue
Livingston New Jersey 07039(US)

(72) Inventor: Lester, William M.
4389 White Cedar Lane
Del Ray Beach Florida 33445(US)

(74) Representative: Abitz, Walter, Dr.-Ing. et al,
Abitz, Morf, Gritschneder, Freiherr von Wittgenstein
Postfach 86 01 09
D-8000 München 86(DE)

(54) Container closure, components thereof and method for making same.

(57) The invention provides a container closure comprised of a liner and a closure member meeting the pressure and vacuum impregnability requirements of the industry and a method for making said container.

FIG. 3

# TITLE OF THE INVENTION

CONTAINER CLOSURE, COMPONENTS THEREOF AND
METHOD FOR MAKING SAME

FIELD OF THE INVENTION

This invention relates generally to container closures and
methods for manufacture thereof and pertains more particularly
to pressure and vacuum resistant closures and to the making of
same.

BACKGROUND OF THE INVENTION

The container industry has seen various approaches to the
solution of its requirement, particularly for food and like
product containment, of impregnability of containers as respects
pressure and vacuum.  Applicants herein have participated in
such efforts to meet the given requirement, as elicited in a
U.S. patent discussed below and disclosing structure involving
cap or closure refinement and container neck outlines
cooperative with same.

Where one addresses the pressure and vacuum impregnability
requirement with a view to accommodate standard container neck
outlines, as contrasted with the above-noted involvement of
applicants with specially configured container necks, the
solution has typically involved the production of a cap, the
separate production of a liner having the required sealing
capabilities and a further step of assembling the individually
produced cap and liner.

0174029

Other efforts have looked toward the common molding of a cap with liner, i.e., by introducing a common material into a mold configured to yield the composite cap and liner. This practice limits the composite product to uniform characteristics, e.g. resilience and like physical properties, since such material constitutes both the cap and liner. Thus, while the costly manufacturing step of assembling a separately made liner with a separately made cap is eliminated, performance limitations accompany the practice.

In vacuum product containerization, it is quite desirable for the protection of the manufacturer, the retailer and the consumer to be able to readily determine if the initial vacuum pressure at the point of container closing has been maintained fully to the point of consumer purchase and use. Recent times have illustrated the problems attendant on food vacuum packed in containers pressurized properly at the manufacturing location and which have lost vacuum to the extent of having been subjected to air to create sufficiently high bacteria in packaged foods to cause illness and loss of life. Apart from this most significant problem, there is the further potential monetary loss attending product recall, immediate loss of respect for the product involved and its manufacturer and general wariness as to further purchase thereof with the passage of time.

While various closure structures for output vacuum pressure indication are shown in patents, all are considered by applicants herein to be unduly complex and difficult to manufacture at appropriate cost.

SUMMARY OF THE INVENTION

The present invention has as its primary object the provision of container closures meeting the pressure and vacuum impregnability requirements of the industry and, at the same time, facilitating less expensive manufacture of such closures and also accommodating material characteristic selection and thus performance diversity as between the cap and liner.

In attaining this and other objects, the invention provides a container closure comprised of a closure member, which is molded on a liner, the liner having a first surface secured to the top panel and a second surface opposite the first surface and including a member dependent from the liner and configured both to effect container sealing and for releasable securement of the liner to a forming member in the course of such molding of the closure member thereon. The closure member and liner materials may thus be diverse, since they are separately formed. While there are separate manufacturing steps for making the liner and the closure member, the invention eliminates the customary step of assembling preformed liners with preformed closure members to obtain the desired performance diversity therebetween.

Another object of the present invention is the provision of improved vacuum pressure-indicative container closures.

In attaining such additional objective, the invention provides a closure having an inner member, referred to as a liner, adapted to seal a container having contents under vacuum pressure, and an outer member, referred to as closure member, securing the liner thereto about the liner periphery. An interior extent of the liner is thereby permitted movement relative to the closure member, i.e., is not secured to the closure member to restrict movement between the two parts of the closure. At the point of container initial closure, the liner interior extent is withdrawn, as vacuum pressure is attained, from its theretofore normal self-biased disposition adjacent the closure member to within the upper neck of the container and is deformed to the extent that initial container vacuum pressurization occasions. Upon loss of such initial vacuum pressure, the liner interior extent moves into its normal self-biased disposition adjacent the closure member. Discernment of the disposition of the liner interior extent relative to the closure member is thus indicative of whether the initial vacuum pressure is being maintained or has been lost.

In a particularly preferred embodiment of a vacuum pressure-indicative closure of the invention, such observation of the liner disposition is effected by providing a passage through the closure member for residence of an indicator in the

0174029

form of a projection formed atop the liner, the closure member passage being of configuration selected to permit movement of the projection through the closure member and therebeyond upon vacuum pressure loss in the associated container, thus to be viewable above the closure member upper surface. The liner and closure member materials are selected of respective non-adhering plastics and desirably of contrasting colors to enhance the visibility of vacuum pressure loss.

In the practice of the vacuum pressure-indicative method of the invention, the liner material and the closure member material are selected to be mutually non-adhering in the course of the molding operation. Thus, the liner can have the above-noted capability for movement and deformation with respect to the closure member in the liner interior extent. To enable this effect, and yet retain the liner in the closure member molded thereon, the invention introduces further practice of causing the molding material in the closure member forming stage to form liner retaining structure at the periphery of the liner, while at the same time retaining the formed liner on the forming member. The closure structure of the invention above discussed is thus facilitated in an efficient two-stage practice.

The foregoing and other features of the invention will be further understood from the following detailed description of preferred embodiments and practices thereof and from the drawings wherein like reference numerals identify like parts throughout.

Fig. 1 is the sectional view of a first embodiment of a liner in accordance with the invention as would be seen from plane I-I of Fig. 2.

Fig. 2 is full bottom plan view of the Fig. 1 liner.

Fig. 3 is an enlarged view of the leftward end portion of the Fig. 1 liner.

Fig. 4 is a partial sectional view showing a forming tool for the Fig. 1 liner.

Fig. 5 is a partial sectional view showing a liner as would be formed by the Fig. 4 forming tool resident in a further forming tool for a closure member or cap.

Fig. 6 is a partial sectional view showing a closure as would be formed by the Fig. 5 forming tool with such liner resident therein.

Fig. 7 is a partial sectional view showing the closure of Fig. 6 in assembly with a container, the container being indicated in phantom lines.

Fig. 8 is a sectional slice of the Fig. 7 closure as would be seen from plane VIII-VIII of Fig. 7.

Fig. 9 is a partial sectional view of a second embodiment of a closure in accordance with the invention embodying a closure member and liner differently configured from the closure of Fig. 7.

Fig. 10 is a partial section view of a third embodiment of a closure in accordance with the invention embodying the closure member of Fig. 7 in conjunction with the liner of the Fig. 9 embodiment.

Fig. 11 is a top plan view of container closure in accordance with the invention.

Fig. 12 is a sectional view of the Fig. 11 closure as would be seen from plane XII-XII of Fig. 11.

Fig. 13 is an enlarged partial sectional view showing a forming tool for the liner of the Fig. 11 closure.

Fig. 14 is an enlarged partial sectional view showing a liner as would be formed by the Fig. 13 forming tool resident in a further forming tool for a closure member or cap.

Fig. 15 is an enlarged partial sectional view of a closure as formed in the practices of Figs. 13 and 14 and stripped from the forming tool of Fig. 14.

Fig. 16 is a partial enlarged sectional view showing the closure of Figs. 11 and 12 in assembly with a vacuum-pressurized container, the container being indicated in phantom lines.

DESCRIPTION OF PREFERRED EMBODIMENTS AND PRACTICES

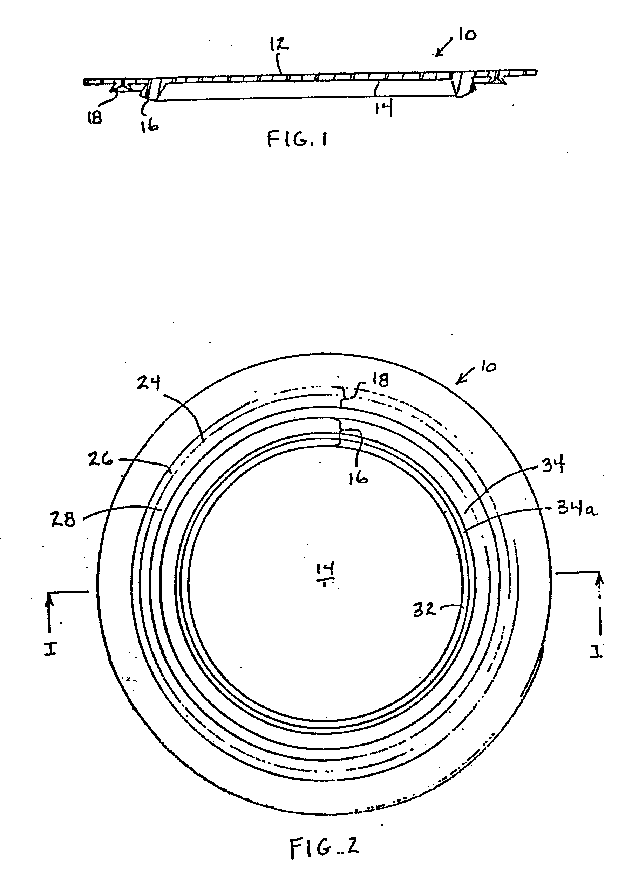

Referring to Figs. 1 and 2, liner 10 is a cylindrical body having top surface 12 and undersurface 14, the latter having first and second container sealing members 16 and 18 depending therefrom.

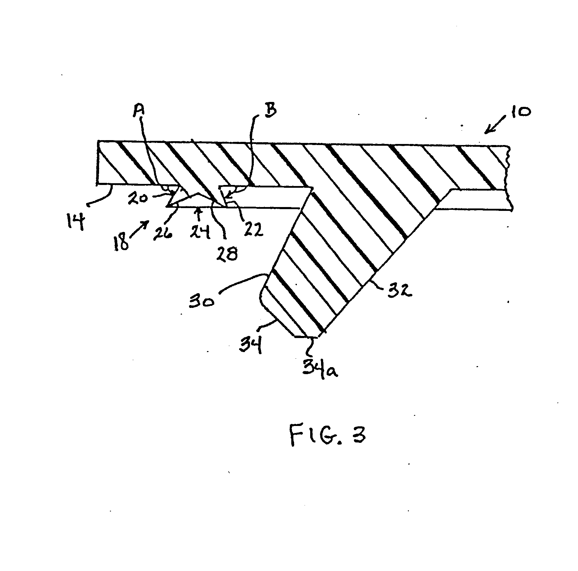

Sealing member 18 constitutes a secondary container seal and, as discussed below also functions in plural method aspects, namely, to retain liner 10 with a closure member (cap) forming tool and to preclude melt material for cap forming from egress therebeneath during cap forming. For both purposes, member 18 is configured, as is seen in the enlarged view of Fig. 3, with radially exterior surface 20 and radially interior surface 22, having respective opposite divergences relative to liner 10 undersurface 14, as indicated by angles A and B in Fig. 3. These angles are preferably equal, and distend respectively counterclockwise and clockwise from undersurface 14, as shown by their course lines and arrows. Groove 24 is formed interiorly of surfaces 20 and 22 and is bounded by sealing surfaces 26 and 28. All of surfaces 20, 22, 26 and 28 are endless and circular, as is seen in Fig. 2.

Sealing member 16 constitutes a primary container seal and is depicted, akin to the container seal shown in U.S. Patent No. 4,087,016, issued in the names of applicants herein and others on May 2, 1978 and alluded to at the outset above. As such, member 16 includes a first course 30 depending acutely from liner undersurface 14, a second course 32 depending at a lesser acute angle from liner undersurface 14 than course 30, and a third tapered course 34 with end flat 34a bridging the ends of courses 30 and 32 and itself extending radially downwardly relative to liner undersurface 14.

In the initial course of application of liner 10 to the neck 36 of container 38 (Fig. 7), third course 34 seats within the

0174029

neck opening and cams courses 30 and 32 into illustrated relationship with neck interior wall 40 as the liner is pressed down upon the container. This action effects a primary sealing of the container, since such deformation of sealing member 16 gives rise to a resilient biasing of first course 30 against neck wall 40.

As liner 10 fully seats on container neck 36, secondary sealing member 18 confronts neck top surface 42 and resiliently engages same, providing a secondary seal in the embodiment under discussion.

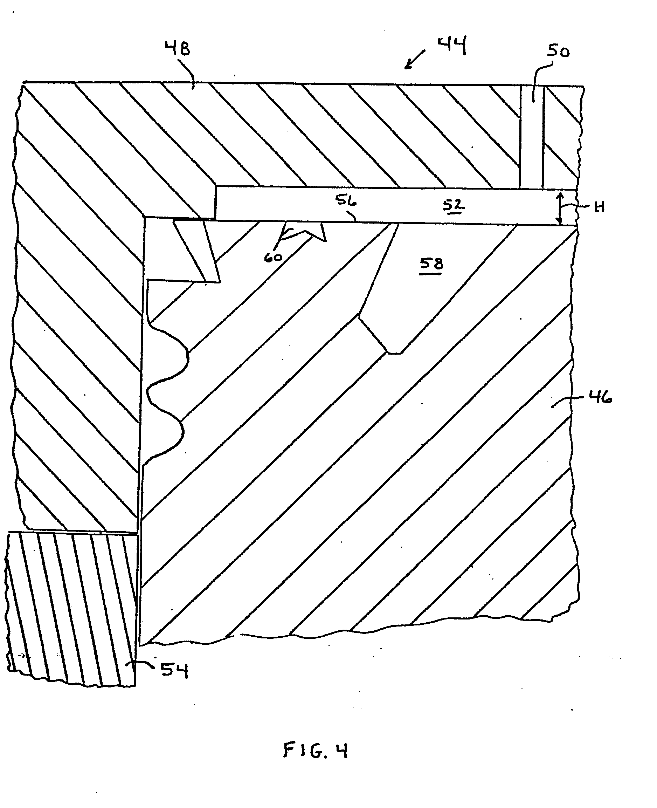

Referring now to Fig. 4, liner forming tool 44 includes core 46 and liner forming mold half 48, having melt passage 50 extending into cavity 52. Ejector mold half is disposed to position core 46 precisely relative to mold half 48 to define cavity height H. As will be seen in Fig. 4, core 46 has its upper working end 56 configured with recesses 58 and 60, corresponding to sealing members 16 and 18, respectively, and upon introduction of melt matter and setting of same, separation of core 46 from jacket 48 results in the formation of liner 10 of Fig. 1, nested atop surface 56 of core 46 and secured therewith by reason of the containment of sealing member 18 in core recess 58.

As will be appreciated by thosed skilled in the injection molding art, plastic shrinkage occurs radially inwardly in the course of setting and curing of material comprising the injection molded article. In the present instance, liner 10 shrinks radially inwardly and such shrinkage results particularly in surfaces 22 and 28, i.e., the radially inward surfaces of sealing member 18, tightly nesting in the radially interior portion of recess 60, effecting a releasable securement of liner 10 to core 46. Such securement is at a sufficiently radially outward location on liner 10 to further preclude cap forming melt material from egress into the interstice between liner 10 and core surface 56.

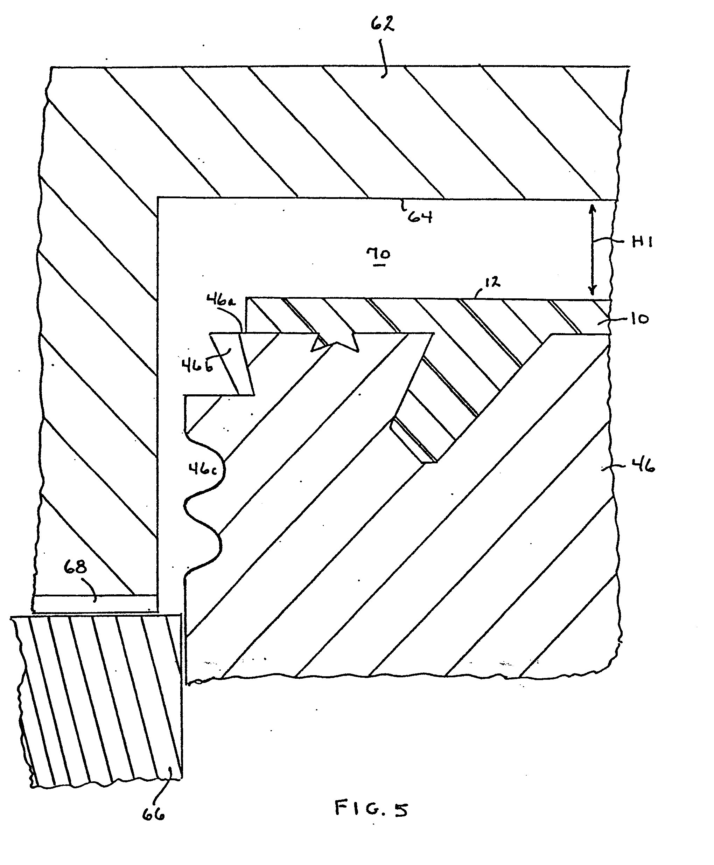

The liner forming practice just discussed preferably takes place at a first station of commercially available molding apparatus which includes a rotatable support table indexable by rotation to a second station. While the first station places core 46 in liner mold half 48, the second station places core 46 with formed liner 10 thereon, as depicted in Fig. 5, interiorly of closure member forming mold half 62. Surface 64 of mold half 62 is spaced by height H1 from liner top surface 12 by engagement of ejector mold half 66 and the side end 66 of mold half 62. Melt passage 68 extends into cavity 70.

Unlike the situation applying in the course of forming of liner 10 with mold half 48, which seated upon ledge 46a of forming tool 46 and thus rendered inoperative both tooth cavity 46b and thread cavity 46c of tool 46, mold half 62 is configured to render cavities 46b and 46c operative.

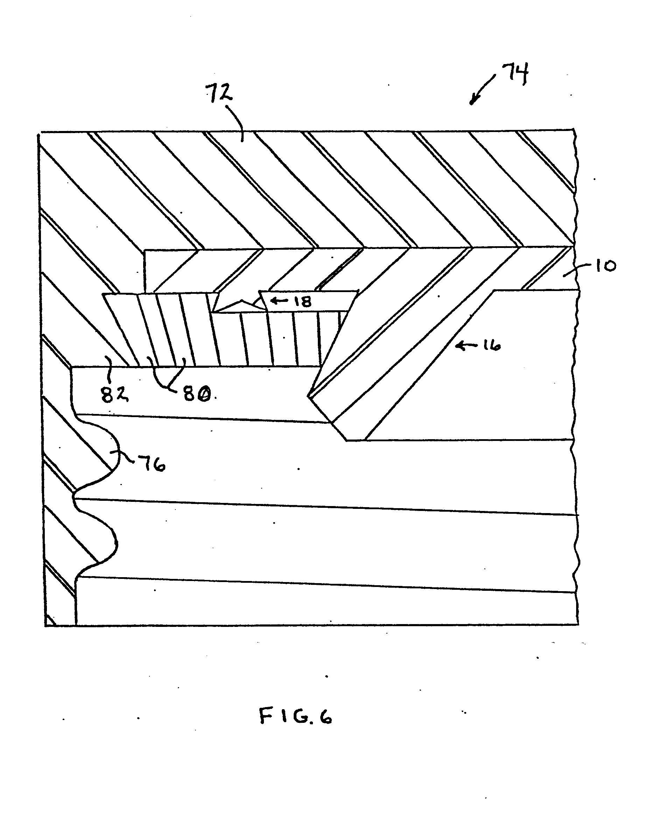

In the course of melt conveyance into cavity 70, cap or closure member 72 is formed in secured relation to liner 10, as shown in Fig. 6, forming closure 74. Upon setting of the melt in cavity 70, core 46 is removed from closure 74, as by stripping or unscrewing, sealing members 16 and 18 exiting recesses 58 and 60 and overcoming the retention forces as between sealing member 18 and core 46. Sealing member 16 and 18 and cap threads 76 survive a stripping operation with formed configuration as in Fig. 6.

At this stage of the operation of practice with the commercial injection molding apparatus, core 46 is returned to the first working station and practice repeats as above described. Liner 10 material is so selected and the indexing cycle time is so set that the liner sets and cures in the course of movement of core 46 from the first station to the second station. Diverse material liners may thus be introduced with diverse material cap melt matter in accordance with the invention. Accordingly, the closure member may be formed of material of one durometer (flex modulus) for rigidity and strength, whereas the liner may be formed of a material of another durometer for flexibility desired for sealing action of sealing members 16 and 18 thereof. In typical selection, the liner is a polypropylene copolymer or similar plastic material having like physical and/or chemical characteristics and having a flex modulus of from about 115K to approximately 160K and the closure material is a monopolymer of flex modulus of 160 K and greater. Liner 10 may be secured to the closure member by mutual bond between the materials accomplished by molding process of two materials having an affinity for one another.

Returning again to Fig. 5, cavity 70 will be seen to include flute former 78 in each of its teeth forming cavities 46b for forming flutes or teeth 80 shown on ring 82 in Fig. 6.

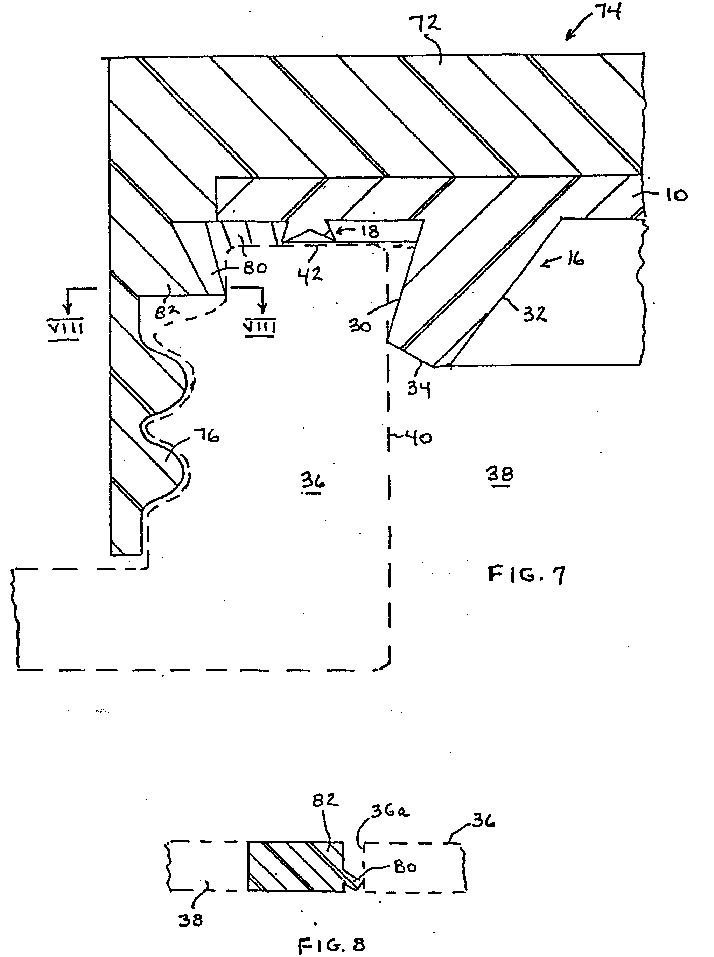

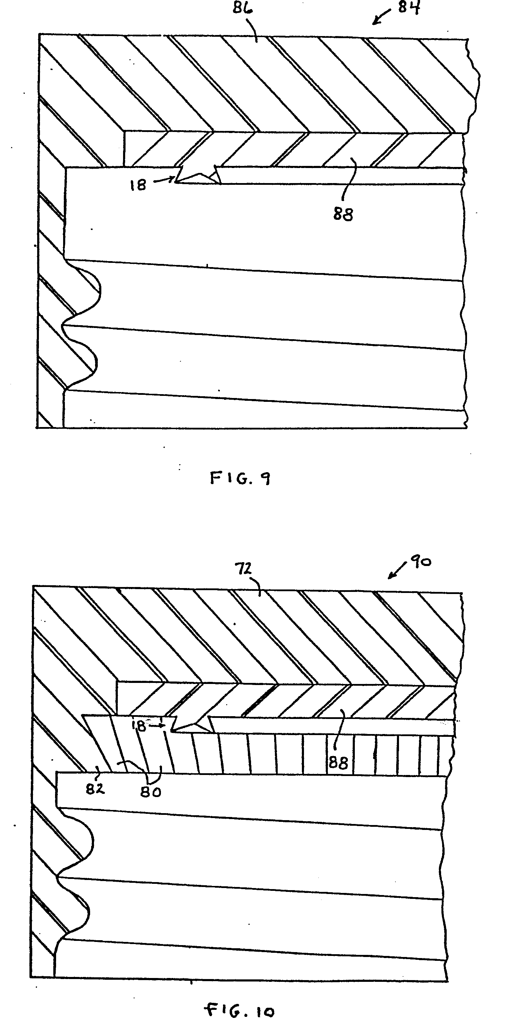

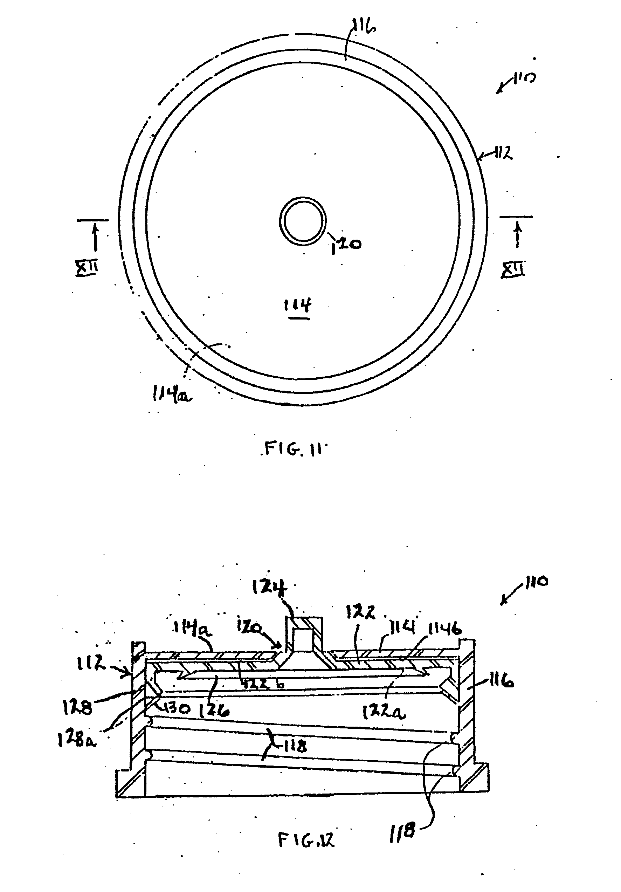

In the course of threading of closure 74 onto container neck 36 (Fig. 7), flutes 80 are deflected upon engagement with the container neck in disposition indicated in Fig. 8, i.e., so as to provide a reverse or interference fit with the container neck surface. Upon reverse sense movement thereof, as in the case of "back-off" (self-opening tendency), ring 82 and particularly flutes 80 thereon constitute back-off retardant means. Such retardant means can be enhanced if corresponding flutes are formed on the container. Opening sense movement exerted by one wishing to open the closure readily overcomes the resistance of flutes 80.

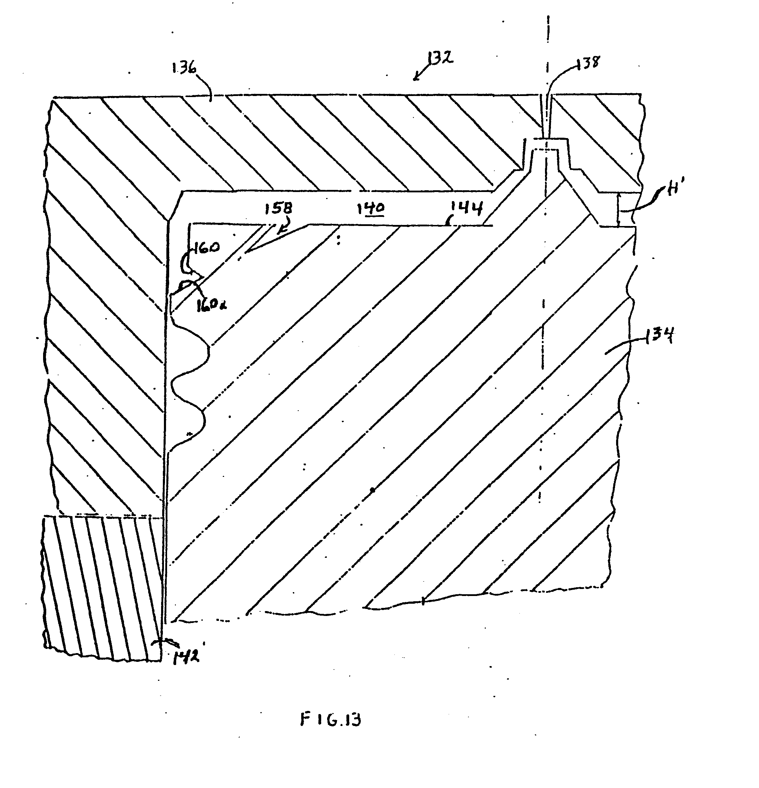

In Fig. 9, a second closure embodiment 84 includes closure member 86, alike to closure member 72 has been formed atop liner 88, except for the absence of ring 82 and flutes 80 which are omitted in the absence of need for anti-backoff capability. Liner 88 also differs from liner 10 in omitting sealing member 16. Here, sealing member 18 is a primary and sole sealing means and no secondary sealing member is involved.

Turning to Fig. 10, in closure embodiment 90, liner 88 is employed with closure member 72 and sealing member 18 is now coactive with flutes 80 to provide primary sealing of a container with anti-backoff capability.

Closures in accordance with the invention as thus far shown and discussed will be seen to have in common sealing member 18 or its equivalent in structure, one surface of which is in communication with ambient or environmental pressure, i.e., surface 20, and another surface which is in communication with container interior pressure, i.e., surface 22. Assuming the container contents being sealed by closures of the invention to be positively pressurized, as in the case of carbonated beverages; the ultimate sealing surface confronted by same will be surface 22, and pressure exerted by the contained positively pressurized medium will act on surface 22 to increase sealing force for the container. Considering the alternative, namely, where the contained contents create a vacuum, as in the case of fluid contents applied at elevated temperature at the containment station, the environment has higher pressure than the contents and acts upon surface 20. The consequence of the described structure is again sealingly responsive to applied pressure differential, since surface 20 will coact increasingly sealingly to environmental pressure in the latter situation.

In addition to such pressure/vacuum adaptiveness, liners of the invention have the further capabilities noted above of both

- 14 -

0174029

retaining the liner with a closure member forming tool core and of precluding egress of closure member forming melt material into the interstice between the closure member forming tool core and the formed liner thereon.

Methods in accordance with the invention as thus far shown and discussed will be seen to involve a sequence of steps as follows. One configures a forming tool core and a first forming tool jacket to define a first cavity for the making of a liner of any one of the several outlines depicted above or other chosen outline. The core is now placed in the first forming tool jacket and one introduces first molding material into the first cavity, thereby to form a liner on the core.

A second forming tool jacket is configured to define, with the core with formed liner thereon, a second cavity for the making of a closure member of desired outline, and one places the core with formed liner thereon in the second forming tool jacket and introduces second molding material into the second cavity, thereby to form such closure member upon said formed liner to provide a closure. The core is removed from said second forming tool jacket and the closure is removed from the second forming tool jacket.

Such method is so practiced as to configure the forming tool core with a recess adapted both to define a container sealing member for a container in the liner and to effect releasable securement of a formed liner to the forming tool core upon setting of the first molding material.

In the described method, one may configure the forming tool core with both a closure member thread former and an anti-backoff ring and flute former. Here, the first forming tool jacket is configured so as to preclude egress of the first molding material into operative relation with said closure member thread and anti-backoff ring and teeth formers. As also noted, the core may be provided with first and second recesses for forming plural container sealing members.

Discussion will now be provided of vacuum pressure-indicative closures of the invention and methods of making same.

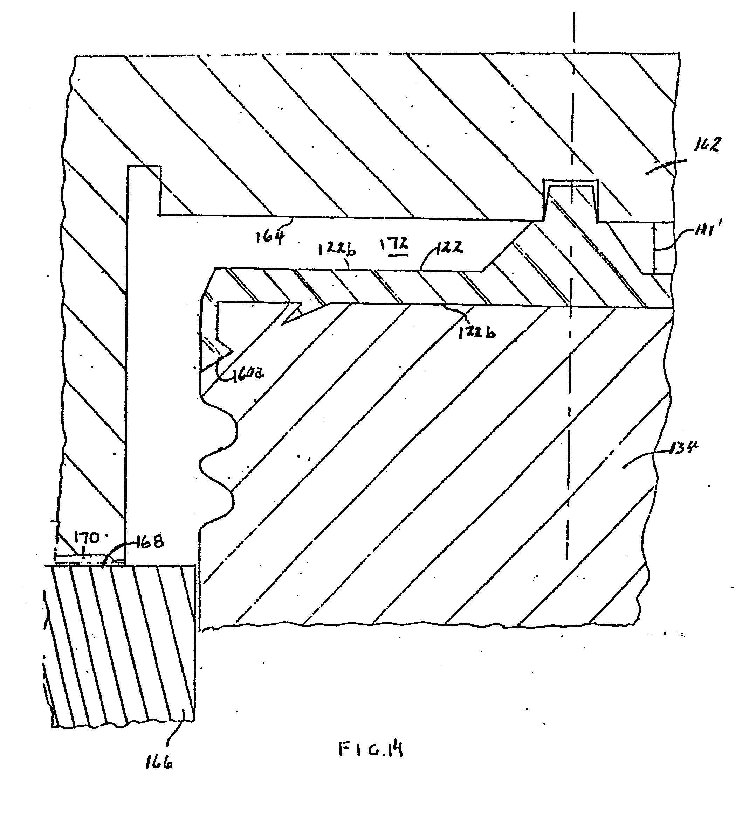

Referring to Figs. 11 and 12, closure 110 includes cap or closure member 112 having a top panel 114 and a skirt 116, interiorly threaded at 118, an opening or passage 120 being formed through top panel 114. Liner 122 of closure 110 has a central projection 124 resident in top panel opening 120 and extending substantially above the upper surface 114a thereof.

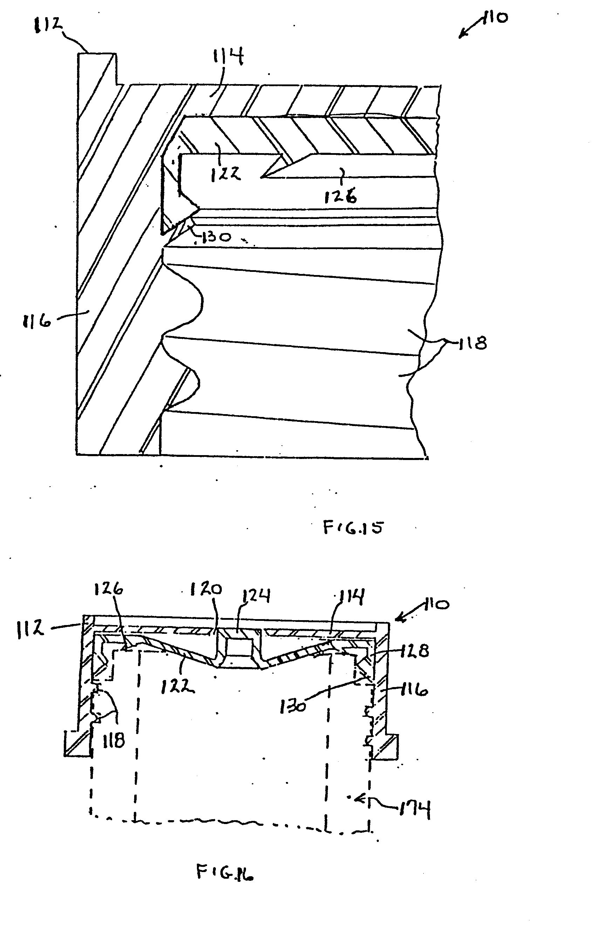

Liner 122 further includes, dependent from its lower surface 122a, a sealing member 126 adapted to engage the upper neck surface of a container to seal same. At its periphery, liner 122 self-biases to its normal disposition upon manufacture and prior to application to a container, as is shown in Fig. 12. Liner 122 defines an annular depending skirt 128 extending downwardly to an end surface 128a, which nests within an annular detent rib or lip 130 formed interiorly of closure member 112 on skirt 116, as by practice discussed below in connection with Figs. 13 and 14.

Closure member 112 and liner 122 are selected to be of mutually non-adhering plastics and, accordingly, upper surface 122b of liner 122 and undersurface 114b of top panel 114 are not adheringly engaged, i.e., are not bonded to one another, and the interior extent of liner 122 is thus free to move from its illustrated Fig. 12 disposition and deform under the influence of negative pressure thereon in the course of securement of closure 10 to a container.

Referring now to Fig. 13, liner forming tool 132 includes core 134 and liner forming mold half 136, having melt passage 138 extending into cavity 140. Ejector mold half 142 is disposed to position core 134 precisely relative to mold half 136 to define cavity height $H^1$. Core 134 has its upper working surface 144 configured with recess 158, corresponding to sealing member 126 for forming same and has side surface 160 configured in lateral V-shape, or any other shape configuration chosen to effectively seal a container. Upon introduction of melt matter and setting of same, separation of core 134 from mold half 136 results in the formation of liner 122 of Fig. 12, nested atop surface 144 of core 134 and releasably secured therewith by reason of retentive action of recess 158 and the upper portion of side surface 160.

The liner forming practice just discussed preferably takes place in a first station of commercially available molding apparatus which includes a rotatable support table indexable by rotation to a second station. While the first station places core 134 in liner mold half 136, the second station places core 134 with formed liner 122 thereon, as depicted in Fig. 14, interiorly of closure member forming mold half 162. Surface 164 of mold half 162 is spaced by height $H1^1$ from liner top surface 122b by engagement of ejector mold half 166 and the side end 168 of mold half 162. Melt passage 170 extends into cavity 172.

In the course of melt conveyance into cavity 172, closure member 112 is formed in secured relation to liner 122 by virtue of the formation of closure member rib 130 in retentive disposition thereto. This occurs by reason by angulation of the lower extent 160a of core side surface 160, which permits entry of some of the melt matter to work its way beneath the periphery of the formed liner. This structure is best seen in the enlarged partial view of Fig. 15. The first or liner-forming molding material and the second or closure member-forming molding material are selected to be mutually non-adhering, the closure member being a bonding copolymer, such as polypropylene, and the liner material material being a non-bonding copolymer, such as low density polyethylene.

Turning now to Fig. 16, closure 110 is shown assembled with container 174, shown in phantom.  The vacuum pressurization attending the application of the closure to the container occasions withdrawal of the interior extent of liner 122 from its normal disposition relative to closure member 112 of Fig. 12 and entry thereof into the neck of the container as illustrated.  In the course of this action, projection 124 recedes from its prior disposition exteriorly of closure member 112, i.e., well above top panel 114 thereof, to be essentially flush with the top panel upper surface 114a.  Sealing surface 126 is in sealing engagement with the top surface of the container neck and threading 118 of the closure is in meshed engagement with counterpart container threading to maintain the assembly.  Upon loss of vacuum in the container, the closure will assume the normal configuration thereof in Fig. 12, with projection 124 clearly above the top panel of the closure member, thus providing visible indication to a manufacturer, retailer or consumer of vacuum loss.  With the liner material and the closure member materials of respective different contrasting colors, the indication is heightened in visibility.

As will be seen from the foregoing, the invention provides in one vacuum pressure-indicative aspect thereof a container closure comprising a closure member and a liner supported at its periphery by the closure member and including interior extent normally disposed adjacent the closure member but moveable away from the closure member under the influence of vacuum pressure in the closure, the liner including a projection thereon, the closure member defining a passage therethrough for residence of the projection, the projection being configured to project outwardly of the passage in such normal disposition of the liner and to nest. inwardly of the passage upon such movement of the liner interior extent away from the closure member. The closure member is molded upon the liner, the closure member and the liner being constituted by mutually non-adhering materials. The closure member and the liner include respective top panels and depending skirts, the closure member skirt including a peripheral interior lip providing a detent engaging the liner skirt and retaining the liner in the closure member.

In another vacuum pressure-indicative aspect, the invention will be seen to provide a container closure comprising a closure member and a liner constituted by respective non-adhering materials, the closure member being molded on the liner and defining a detent for mechanical retention of the liner.

In a further vacuum pressure-indicative aspect, the invention provides a method for making·a container closure, comprising the steps of: (a) configuring a forming tool and a first forming tool jacket to define a first cavity·for·the making of a liner of preselected outline; (b) placing the core in the first forming tool jacket and introducing first molding material.into the first cavity, thereby to form a liner on the core; (c) configuring a second forming tool jacket to define, with the core with the formed liner thereon, a second cavity for the making of a closure member of preselected outline; (d) placing the core with formed liner thereon in the second forming tool jacket and introducing second molding material, selected to be non-adhering with respect to the first molding material, into the second cavity, thereby to form such closure member upon the formed liner to provide a closure; and (e) removing the core from the second forming tool jacket and removing the closure from the second forming tool jacket. Such method is practiced in step (d) in manner effecting entry of the second molding material between the formed liner and the forming tool core to define a closure member detent for mechanical retention of the formed liner with the closure member.

Various changes to the described structure and modifications to the described practice may be introduced without departing from the invention. The particularly illustrated preferred embodiments and methods are thus intended in an illustrative and not in a limiting sense. The true spirit and scope of the invention is set forth in the following claims.

- 21 -

What Is Claimed Is:

1. A container closure comprised of a liner and a closure member, said closure member being molded on said liner, said liner being secured at least in part to said closure member and including means dependent from said liner and configured both to define a container sealing member and cooperative with a closure member forming tool for securement of said liner to said forming tool in the course of such molding of said closure member on said liner.

2. The container closure claimed in claim 1 wherein said liner is circular and wherein said dependent member includes endless first and second surfaces respectively oppositely diverging from said liner and oppositely deflectable relative thereto to provide different respective sealing actions for a container in response to environmental pressure and vacuum applied to said liner.

3. The container closure claimed in claim 1 wherein said liner and said closure member are comprised of respectively different materials.

4. The container closure claimed in claim 1 wherein said liner and said closure member exhibit respectively diverse flexibilities.

5. A method for making a container closure claimed in claim 1, comprising the steps of:

(a) configuring a forming tool core and a first forming tool jacket to define a first cavity for the making of a liner of preselected outline, wherein said forming tool core is shaped to define structure adapted both to define said sealing member for a container in said liner and to effect securement of a formed such liner with said first forming tool in the course of forming a closure member on a formed such liner;

(b) placing said core in said first forming tool jacket and introducing first molding material into said first cavity, thereby to form a liner on said core;

(c) configuring a second forming tool jacket to define, with said core with formed liner thereon, a second cavity for the making of a closure member of preselected outline;

(d) placing said core with formed liner thereon in said second forming tool jacket and introducing second molding material into said second cavity, thereby to form such closure member upon said formed liner to provide a closure; and

(e) removing said core from said second forming tool jacket and removing said closure from said second forming tool jacket.

6.    The method claimed in claim 5 wherein said step (a) is practiced to configure said forming tool core with a recess adpated both to define said sealing member for a container in

- 23 -

said liner and to effect such securement of a formed liner to said forming tool core upon setting of said first molding material.

7.    The method claimed in claim 5 wherein said step (a) is further practiced to configure said forming tool core with an anti-backoff teeth former and wherein said step (a) is also practiced in manner configuring said first forming tool jacket to preclude egress of said first molding material into operative relation with said anti-backoff teeth former of said forming tool core.

8.    The method claimed in claim 5 wherein said first and second molding materials are selected to be respectively different in composition.

9.    The method claimed in claim 5 wherein said first and second molding materials are selected to exhibit respectively diverse flexibilities in such formed closure.

10.    The container closure claimed in claim 1 wherein said liner is supported at its periphery by said closure member and includes interior extent normally disposed adjacent said closure member but moveable away from said closure member under the influence of vacuum pressure in said closure, said liner including a projection thereon, said closure member defining a passage therethrough for residence of said projection, said projection being configured to project outwardly of said passage upon       movement of said liner interior   toward      from said closure member.

11. The container closure claimed in claim 10 wherein said closure member and said liner are constituted by mutually non-adherent materials.

12. The container closure claimed in claim 11 wherein said closure member and said liner include respective top panels and depending skirts, such closure member skirt including a peripheral interior lip providing a detent engaging such liner skirt and retaining said liner in said closure member.

13. The container claimed in claim 12 wherein said closure member and said liner are comprised of respective diverse plastics.

14. The container closure claimed in claim 10 wherein said closure member and said liner are of respectively different colors.

15. A method for making the container closure claimed in claim 1, comprising the steps of:

(a) configuring a forming tool both to be operative to define said sealing member for a container in a liner formed with such forming tool and to retain a formed such liner with said forming tool in the course of forming a closure member on a formed such liner;

(b) configuring a mold cavity to form, with said forming tool, a liner of preselected outline;

(c) introducing first molding material into said mold cavity of said step (b) to form a liner on said forming tool;

(d) configuring a mold cavity to form, with such forming tool having such formed liner thereon, a closure member in preselected outline; and

(e) introducing second molding material into said mold cavity of said step (d), to form such closure member upon said formed liner to provide said container closure.

16. The method claimed in claim 15 wherein said step (a) is practiced by providing said forming tool with generally flat upper surface for forming an undersurface of such liner and by providing a recess in said forming tool upper surface having angular divergence relative thereto, such formed liner thereby precluding said second molding material from egress beneath such formed liner and atop said forming tool upper surface in the course of practice of said step (e).

17. The method claimed in claim 15 wherein said first and second molding materials are selected to be mutually non-adherent.

18. The invention claimed in claim 15 wherein said step (d) is practiced in manner effecting entry of said second molding material between said formed liner and aside said forming tool core to define a closure member detent for mechanical retention of said formed liner with said closure member.

FIG.1

FIG..2

FIG. 3

FIG. 4

62

64

70

H1

12

10

46a

46b

46c

46

68

66

FIG. 5

FIG.6

0174029

FIG. 7

FIG. 8

0174029

FIG. 9

FIG. 10

FIG. 11

FIG. 12

FIG.13

FIG.14

0174029

112  114  110

122

126

130

116

118

FIG.15

126  120  124  114  110

112  128

122  130  116

118  174

FIG.16